# EUROPÄISCHE PATENTSCHRIFT

(11) **EP 2 821 191 B1**
(45) Veröffentlichungstag und Bekanntmachung des Hinweises auf die Patenterteilung: **02.09.2015**
(21) Anmeldenummer: 13174730.5
(22) Anmeldetag: 02.07.2013
(51) Int. Cl.: B27M 3/00, E04C 2/12

(54) **Plattenelement aus Holz**
Wooden panel element
Elément de plaque en bois

(43) Veröffentlichungstag der Anmeldung: 07.01.2015
(73) Patentinhaber: Weissteiner, Gerhard, 39030 Vintl/Pfunders (IT)
(72) Erfinder: Weissteiner, Gerhard, 39030 Vintl/Pfunders (IT)
(74) Vertreter: Burger, Hannes

(56) Entgegenhaltungen:
- EP-B1- 1 734 200
- WO-A1-2005/061191
- BE-A- 503 355

## Beschreibung

Die Erfindung betrifft ein Plattenelement aus Holz bzw. einen Balken aus Holz entsprechend den Merkmalen in den Oberbegriffen der Ansprüche 1.

Eine der vielen Verwendungen von Holz als Werkstoff ist jene zur Errichtung von Gebäuden als Gebäudebaustoff, beispielsweise bei traditionellen Bauformen wie der Blockhausbauweise. Bedingt durch eine zunehmende Nachfrage nach Holz als Bauwerkstoff gewinnt dieses aber auch im Fertighausbau und beim Neubau von Gebäuden zunehmende Bedeutung. Dabei kommen insbesondere in einem gewissen Umfang vorfabrizierte größere Wandelemente zum Einsatz. Solche plattenförmige Elemente aus Holz können neben der Verwendung als Wandelement auch für die Herstellung von Böden und Decken eingesetzt werden. Neben Wandelementen aus Holz sind aber auch Binder aus Brettschichtholz, auch als Leimbinder bezeichnet, von Bedeutung, die als Steher oder als tragende Bauteile für Dachstühle verwendet werden können.

Aufgrund eines zunehmenden Gesundheitsbewusstseins in großen Teilen der Bevölkerung und eines dadurch erhofften verbesserten Wohnklimas findet bei der Herstellung derartiger Plattenelemente aus Holz mehr und mehr die Frage des Verzichts auf Zusatzstoffe, wie beispielsweise Leim zur Verbindung der Holzteile, Beachtung.

Aus dem Stand der Technik sind bereits Gebäudewandelemente, wie sie in den Dokumenten EP 1 734 200 B1 und EP 2 060 694 B1 beschrieben werden, bekannt. Das Dokument EP 1 734 200 B1 beschreibt ein Gebäudewandelement in Form einer Holzlagenverbundplatte mit mindestens zwei Lagen aus jeweils lagenweise nebeneinander angeordneten Hölzern. Die beiden Lagen sind mittels einander gegenüberliegenden Nuten und darin eingesetzten Gratleisten miteinander verbunden. Andererseits beschreibt das Dokument BE 503 355 ein aus mehreren parallel ausgerichteten Hölzern zu einem Element verbundenes Bauteil. Zur Verbindung der Hölzer untereinander sind in einander zugewandten Längsseiten Erhöhungen und Vertiefungen entlang ihrer Längserstreckung ausgeformt. Der Querschnitt der Erhöhungen bzw. Vertiefungen ist in der Art einer Schwalbenschwanzverbindung geformt und sind die Hölzer bzw. die Holzteile dementsprechend formschlüssig zusammengefügt.

Das Dokument WO 2005/061191 A1 beschreibt ebenfalls ein aus mehreren Schichten von Brettern zusammengesetztes Holzpanel. Die Bretter einander benachbarter Schichten weisen zueinander komplementäre Ausnehmungen auf, sodass die einander benachbarten Schichten von Brettern formschlüssig ineinander gefügt werden können. Die Bretter einander benachbarter Schichten sind dabei hinsichtlich ihrer Längserstreckung kreuzweise oder zumindest schräg zueinander ausgerichtet. Zur Herstellung einer festen Verbindung zwischen den Schichten sind außerdem noch separate Keile vorgesehen, die zusätzlich in die Ausnehmungen eingefügt werden.

Aufgabe der Erfindung ist es, ein Plattenelement aus Holz bzw. einen Balken aus Holz anzugeben, das/der als Strukturbildender Teil bei der Errichtung von Gebäuden verwendet werden kann.

Die Aufgabe der Erfindung wird durch ein Plattenelement aus Holz, gemäss Anspruch 1, bestehend aus zumindest zwei Schichten aus jeweils parallel nebeneinanderliegend angeordneten Brettern gelöst, wobei die Bretter einer ersten Schicht parallel zu Brettern einer zweiten Schicht ausgerichtet sind, und wobei ein Brett der ersten Schicht und ein Brett der zweiten Schicht durch Schwalbenschwanzverbindungen miteinander verbunden sind und die Schwalbenschwanzverbindungen durch eine in Richtung einer Längserstreckung der Bretter aufeinanderfolgende und in den Brettern ausgeformte Abfolge von schwalbenschwanzförmigen Ausnehmungen und Vorsprüngen gebildet sind. Dabei erstrecken sich die Ausnehmungen und Vorsprünge in Richtung einer Breite der Bretter, wobei ein Brett der ersten Schicht und ein Brett der zweiten Schicht in Richtung der Breite gegeneinander versetzt und einander überlappend angeordnet sind und die Ausnehmungen der Schwalbenschwanzverbindungen von einem Brettrand zu einer Brettmitte hin sich keilförmig verjüngend geformt sind. Dies hat den Vorteil, dass die Bretter bei der Herstellung des Plattenelementes an deren Anlageflächen dicht aneinanderliegend zusammengefügt werden können. Als Folge dessen wird auch eine hohe Wärmeisolierende Wirkung bei dem so hergestellten Plattenelement erreicht. Darüber hinaus weist das solchermaßen ausgebildete Plattenelement auch eine hohe innere Steifigkeit und Formstabilität auf.

Indem die Ausnehmungen der Schwalbenschwanzverbindungen beidseitig eine Schrägstellung mit einem halben Keilwinkel mit einem Wert zwischen 0,5° und 10°, vorzugsweise zwi schen 3° und 10° aufweisen, wird eine Vereinfachung des Zusammenbaus der Bretter zu dem Plattenelement bei gleichzeitig hoher innerer Festigkeit und Stabilität erreicht.

Die Ausbildung des Plattenelementes, wonach sich ein Brett der ersten Schicht und ein Brett der zweiten Schicht über eine Überlappungsbreite mit einem Wert von gleich oder größer 10% der Breite der Bretter überlappen, hat den Vorteil einer erhöhten Formstabilität der durch die Bretter gebildeten Struktur des Plattenelementes.

Gemäß einer Weiterbildung des Plattenelementes ist vorgesehen, dass die Abmessungen der Vorsprünge im Verhältnis zu den Abmessungen der Ausnehmungen so gewählt sind, dass Bretter jeweils einer Schicht spaltfrei aneinander liegen. Dies hat den Vorteil einer erhöhten Wärmeisolierenden Wirkung des Plattenelementes indem die effektive Dicke des Plattenelementes entsprechend größer ist.

Indem bei dem Plattenelement der Wert der Überlappungsbreite ca. einer Hälfte der Breite eines Brettes entspricht und zwischen einander benachbarten und innerhalb einer Schicht liegenden Brettern eine Nut-Spund-Verbindung ausgebildet ist, wird sowohl die isolierende bzw. Wärme dämmende Wirkung des Plattenelementes verbessert als auch eine Verstärkung der Verbindung zwischen den Brettern erreicht, indem durch die Nut-Spund-Verbindung eine zusätzliche kraftschlüssige Verbindungswirkung erreicht wird.

Eine Weiterbildung des Plattenelementes, wonach die Vorsprünge und die Ausnehmungen in den Brettern symmetrisch bezüglich einer zu der Breite senkrechten Mittelebene sind hat den Vorteil, dass dadurch die Herstellung eines Systems aus einheitlich geformten Brettern ermöglicht wird. Einheitlich geformte Bretter einer gleichen Grundform können so Modulartig zu Plattenelementen zusammengesetzt werden.

Weiters kann vorgesehen sein, dass die Abmessungen der Ausnehmungen so bemessen sind, dass eine lichte Weite am Rand des Brettes gleichgroß ist wie eine Breite des Vorsprungs im Bereich der Mittelebene. Dadurch wird in vorteilhafter Weise erreicht, dass die Bretter dicht aneinander liegend und damit raumfüllend angeordnet werden können.

Gemäß einer Ausführungsvariante des Plattenelementes kann auch vorgesehen werden, dass in einem ersten Endbereich bezüglich einer Längsachse der Bretter ein Balken angeordnet ist und dieser senkrecht bezüglich der Bretter ausgerichtet ist. Dadurch wird in vorteilhafter Weise eine Erhöhung der Formsteifigkeit des Plattenelementes erreicht.

Indem weiters der Balken zwischen der ersten Schicht und einer dritten Schicht aus Brettern liegend angeordnet ist bzw. der Balken eine Dicke aufweist, deren Wert gleich ist einem Wert der Dicke der Bretter, wird eine standardisierte Gestaltung der Endbereiche der Bretter ermöglicht.

Gemäß einer Weiterbildung des Plattenelementes kann auch vorgesehen werden, dass in einem von den beiden Endbereichen distanziert liegenden Bereich ein Balken, der parallel zu dem in dem ersten Endbereich liegenden Balken ausgerichtet ist, zwischen den Schichten eingelagert wird. Damit und durch die Maßnahme, dass die Bretter und der Balken durch Bolzen, die durch die Bretter und den Balken hindurch reichen, aneinander fixiert werden, wird eine noch höhere Formstabilität des Plattenelementes erreicht.

Indem in den Vorsprüngen der Bretter Vertiefungen zur Bildung von Hohlräumen in dem Plattenelement ausgeformt sind, wird die Ausbildung von Luftgefüllten Hohlräumen in dem Plattenelement ermöglicht, die in vorteilhafter Weise eine Erhöhung der Wärmedämmeigenschaften der Plattenelemente bewirken.

Gemäß einer Weiterbildung ist außerdem vorgesehen, dass in den Vorsprüngen Nuten ausgeformt sind. Dies erlaubt eine einfachere Herstellung der Vertiefungen zur Bildung von Hohlräumen.

Gemäß einer Ausführungsvariante des Plattenelementes ist vorgesehen, dass an einer der Schichten aus Brettern eine zusätzliche Holzverkleidung angeordnet ist, wobei die Holzverkleidung eine Schicht von parallel nebeneinanderliegenden Brettern umfasst. Dies hat den Vorteil einer größeren Vielfalt bei der Auswahl der Gestaltungsmöglichkeiten der Oberflächen der Plattenelemente.

Zum besseren Verständnis der Erfindung wird diese anhand der nachfolgenden Figuren näher erläutert.

Es zeigen jeweils in stark schematisch vereinfachter Darstellung:
Fig. 1 ein aus mehreren Brettern bzw. Holzteilen bestehendes Plattenelement;
Fig. 2 ein Plattenelement mit in drei Lagen bzw. Schichten angeordneten Brettern;
Fig. 3 ein Plattenelement aus Brettern, die Ausgleichsfugen aufweisen;
Fig. 4 ein Brett zur Verwendung in dem Plattenelement gemäß Fig. 3;
Fig. 5 ein weiteres Ausführungsbeispiel des Plattenelementes mit insgesamt fünf Schichten von Brettern;
Fig. 6 eine Ausführungsvariante des Plattenelementes gemäß Fig. 5;
Fig. 7 eine Ausführungsvariante des Plattenelementes gemäß Fig. 6;
Fig. 8 ein Plattenelement gemäß Fig. 6 mit quer liegenden Balken;
Fig. 9 ein weiteres Ausführungsbeispiel des Plattenelements mit einer zusätzlichen Holzverkleidung;
Fig. 10 ein Ausführungsbeispiel des Plattenelementes gemäß Fig. 8 mit einer alternativen Holzverkleidung;
Fig. 11 ein Plattenelement mit einer zweilagigen Holzverkleidung;
Fig. 12 einen aus mehreren Schichten zusammengesetzten Balken;
Fig. 13 die Bretter des Balkens gemäß Fig. 12 in nicht zusammengefügtem Zustand.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

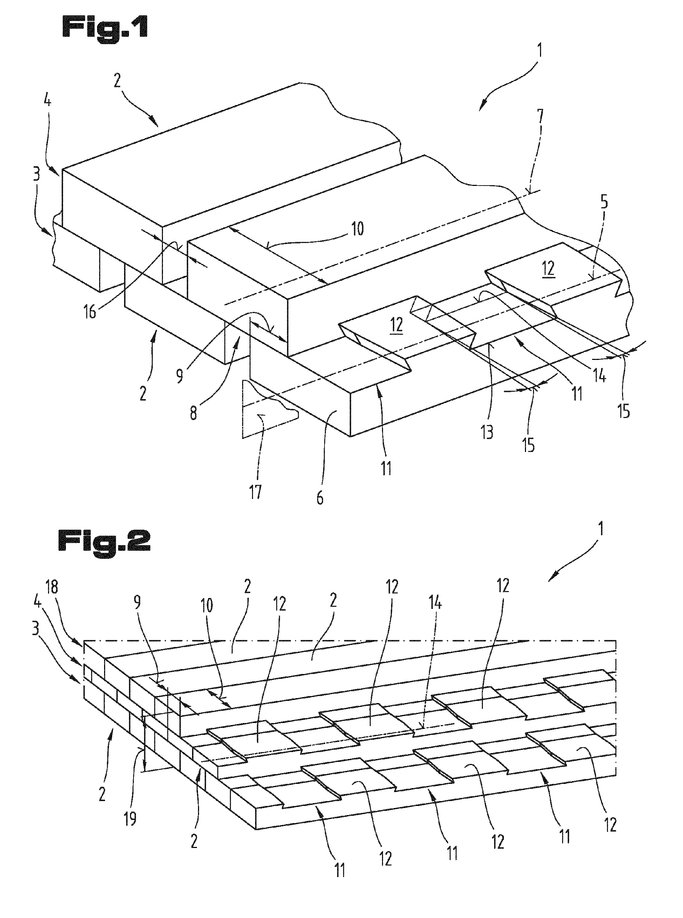

Die Fig. 1 zeigt ein Plattenelement 1, das durch Verbindung von mehreren Brettern 2 bzw. Holzteilen gebildet ist. Das Plattenelement 1 umfasst gemäß diesem Ausführungsbeispiel eine erste Schicht 3 von jeweils parallel nebeneinanderliegend angeordneten Brettern 2 und eine zweite Schicht 4 mit ebenfalls parallel nebeneinander angeordneten Brettern 2. Dabei sind außerdem eine Längserstreckung bzw. Längsachse 5 eines ersten Brettes 6 der ersten Schicht 3 und eine Längserstreckung bzw. Längsachse 7 eines Brettes 8 der zweiten Schicht 4 parallel zueinander ausgerichtet. Schließlich sind auch die Bretter 2 der zweiten Schicht 4 gegenüber den Brettern zwei der ersten Schicht 3 in seitlicher Richtung versetzt angeordnet. Somit weist das Brett 6 der ersten Schicht 3 und das Brett 8 der zweiten Schicht 4 als auch jeweils die weiteren Bretter 2 jeweils eine Überlappungsbreite 9 auf. Der Wert der Überlappungsbreite 9 entspricht in dem dargestellten Ausführungsbeispiel ca. 1/3 einer Breite 10 der Bretter 2. Für diese Überlappungsbreite 9 wird vorzugsweise ein Wert gewählt, der gleich oder größer als 10% der Breite 10 der Bretter 2 ist.

Die Verbindung der einzelnen Bretter 2 zu einem insgesamt Formstabilen Plattenelement 1 wird dadurch erreicht, dass zwischen einander benachbarten Brettern 2, 6, 8 in den Bereichen der Überlappungsbreite 9 eine formschlüssige Verbindung vorgesehen ist. Diese Verbindung ist vorzugsweise nach der Art einer Schwalbenschwanzverbindung ausgebildet. Die Funktionsweise dieser Verbindung kann anhand des in der Fig. 1 rechts unten dargestellten Bereiches mit den beiden Brettern 6 und 8 erläutert werden. Das Brett 6 weist an seiner der zweiten Schicht 4 zugewandten Seite eine Abfolge von Ausnehmungen 11 auf, die in Richtung der Längsachse 5 des Brettes 6 aufeinanderfolgen. Diese Ausnehmungen 11 verlaufen dabei im Wesentlichen senkrecht zu der Längsachse 5 bzw. der Längserstreckung des Brettes 6 und erstrecken sich von Rand zu Rand über die gesamte Breite 10 des Brettes 6. Das Profil einer solchen Ausnehmung 11 ist dabei schwalbenschwanzförmig gestaltet, sodass sich insgesamt über die Längserstreckung bzw. die Längsachse 5 hinweg eine Abfolge von schwalbenschwanzförmigen Ausnehmungen 11 und Vorsprüngen 12 ergibt.

Bei dem Brett 8 der zweiten (oberen) Schicht 4 ist andererseits vorgesehen, dass dessen der ersten (unteren) Schicht 3 zugewandte Seite eine zu der zu den Ausnehmungen 11 und Vorsprüngen 12 des Brettes 6 der unteren Schicht 3 komplementäre Gestalt aufweist. Im miteinander verbundenen Zustand greifen so Vorsprünge 12 des Brettes 6 in Ausnehmungen 11 des Brettes 8 und umgekehrt.

Der Zusammenbau der Bretter 2, 6, 8 zu dem Plattenelement 1 kann somit dadurch erfolgen, dass einander entsprechende Vorsprünge 12 und Ausnehmungen 11 des ersten Brettes 6 und des zweiten Brettes 8 zueinander fluchtend ausgerichtet werden und die beiden Bretter 6, 8 in Richtung der Breite 10 aufeinander zubewegt werden und schließlich durch ineinanderfügen der Ausnehmungen 11 und der Vorsprünge 12 diese miteinander verbunden werden.

Gemäß diesem Ausführungsbeispiel ist auch noch vorgesehen, dass der Querschnitt der Ausnehmung 11 über die Breite 10 hinweg nicht konstant sondern veränderlich ist. Und zwar ist die Ausnehmung 11 von einem Brettrand 13 zu einer Brettmitte 14 hin sich keilförmig verjüngend geformt. Die Ausnehmungen 11 weisen somit beidseitig eine Schrägstellung mit einem halben Keilwinkel 15 auf. Die Vorsprunge 12 bzw. die Ausnehmungen 11 der Bretter 2 sind darüber hinaus symmetrisch bezüglich einer zu der Breite 10 senkrechten und die Brettmitte 14 enthaltenden Mittenebene 17. Der Wert des halben Keilwinkels 15 wird vorzugsweise aus einem Bereich zwischen 1,5° und 10°, bevorzugt zwischen 3° und 10°, gewählt.

Bei dem Ausführungsbeispiel des Plattenelementes 1 gemäß der Fig. 1 sind die Abmessungen des Vorsprunges 12 am Brett 6 im Verhältnis zu den Abmessungen der Ausnehmung 11 am Brett 8 so gewählt, dass zwischen Brettern 2 derselben Schicht 3 oder 4 ein Spalt 16 frei bleibt. Dies ist der Fall, weil die in Richtung der Längsachse 5 vorhandene Ausdehnung des Vorsprungs 12 an dem Brett 6 etwas größer ist als die entsprechende Ausdehnung der Ausnehmung 11 an dem Brett 8. Die beiden Bretter 6 und 8 können somit nicht ganz bis zur Brettmitte 14 hin ineinandergefügt werden. Die Überlappungsbreite 9 ist deshalb auch kleiner als die halbe Breite 10 der Bretter 2.

Die Fig. 2 zeigt ein Plattenelement 1 mit in drei Lagen bzw. Schichten angeordneten Brettern 2. Neben der ersten Schicht 3 und der zweiten Schicht 4 umfasst das Plattenelement 1 gemäß diesem Ausführungsbeispiel eine dritte Schicht 18 mit ebenfalls parallel zueinander nebeneinander angeordneten Brettern 2. In gleicher Weise wie zwischen den Brettern 2 der ersten Schicht 3 und den Brettern 2 der zweiten Schicht 4 ist auch zwischen den Brettern 2 der zweiten Schicht 4 und den Brettern 2 der dritten Schicht 18 eine formschlüssige Verbindung ausgebildet. Dazu weisen die Bretter 2 der zweiten Schicht 4 nun auch an ihrer der dritten Schicht 18 zugewandten Seite eine regelmäßige Abfolge von Ausnehmungen 11 und Vorsprüngen 12 auf. Andererseits weisen die Bretter 2 der dritten Schicht 18 entsprechende Ausnehmungen 11 und Vorsprünge 12 an ihrer der zweiten Schicht 4 zugewandten Seite auf. Das Profil der Ausnehmungen 11 bezüglich einer zu der Breite 10 der Bretter 2 parallelen Richtung ist in Art einer Schwalbenschwanzverbindung gestaltet, wobei der Querschnitt einen zu der Brettmitte 14 hin sich keilförmig verjüngenden Verlauf aufweist. Bei dem Plattenelement 1 gemäß diesem Ausführungsbeispiel sind die Abmessungen der Vorsprünge 12 im Verhältnis zu den Abmessungen der Ausnehmungen 11 gerade so gewählt, dass Bretter 2 jeweils einer Schicht 3, 4 oder 18 spaltfrei aneinander liegen. Die Überlappungsbreite 9 zwischen Brettern 2 einander gegenüberliegender Schichten 3, 4, 18 entspricht dem nach gerade der Hälfte der Breite 10 der Bretter 2. Indem die Bretter 2 bei dem Plattenelement 1 gemäß diesem Ausführungsbeispiel spaltfrei dicht aneinander liegen, bildet das Plattenelement 1 insgesamt einen im Wesentlichen vollvolumigen Körper mit einer Dicke 19, die ca. drei Lagen von Brettern 2 entspricht. Bei Verwendung des Plattenelementes 1 beispielsweise als Wandelement beim Bau eines Gebäudes hat dies den Vorteil einer entsprechend höheren Isolationswirkung entsprechend der größeren Dicke 19 im Vergleich beispielsweise zu dem Plattenelement 1 gemäß dem Ausführungsbeispiel nach Fig. 1, bei dem, wegen der Spalten 16, die isolierend wirkende effektive Wandstärke wesentlich geringer ist.

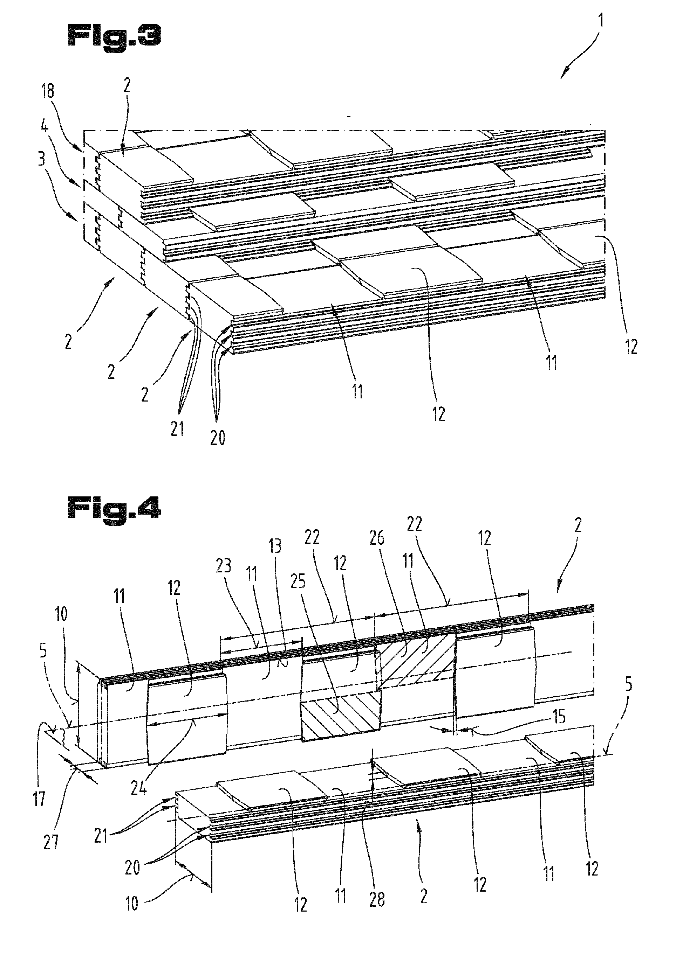

In der Fig. 3 ist eine weitere und gegebenenfalls für sich eigenständige Ausführungsform des Plattenelements 1 gezeigt, wobei wiederum für gleiche Teile gleiche Bezugszeichen bzw. Bauteilbezeichnungen wie in den vorangegangenen Fig. 1, 2 verwendet werden. Um unnötige Wiederholungen zu vermeiden, wird auf die detaillierte Beschreibung in den vorangegangenen Fig. 1, 2 hingewiesen bzw. Bezug genommen.

Die Fig. 3 zeigt ein Plattenelement 1 mit Brettern 2, die zusätzlich auch noch Ausgleichsfugen aufweisen. Dazu sind an den Brettern 2 an den den Vorsprüngen 12 benachbarten Seitenflächen der Bretter 2, d.h. an den Schmalseiten, mehrere Nuten 20 vorgesehen. Die Nuten 20 einer ersten Seitenfläche sind gegenüber Nuten 21 einer gegenüberliegenden Seitenfläche des Brettes 2 derart versetzt angeordnet, dass zwei in einer Schicht 3, 4 oder 18 nebeneinanderliegende Bretter 2 in der Art einer Nut-Spund-Verbindung zusammengefügt werden können. Dies hat den Vorteil, dass in Bezug auf das Zusammenfügen der Bretter mit deren Schwalbenschwanzförmig ausgebildeten und keilförmig verlaufenden Vorsprüngen 12 und Ausnehmungen 11 Ausgleichsfugen zur Verfügung stehen. Dies macht es möglich, die Vorsprünge 12 mit den Ausnehmungen 11 soweit durch entsprechenden Kraftaufwand ineinander zu pressen, dass die dadurch zwischen diesen erreichte Haftreibung eine insgesamt form- und kraftschlüssige Verbindung der Bretter 2 zur Bildung des Plattenelements 1 bewirkt. Dies erlaubt im Übrigen auch den Verzicht auf die Verwendung von Leim zum Verbinden der Bretter 2 zur Herstellung des Plattenelementes 1.

Die Fig. 4 zeigt ein Brett 2 zur Verwendung in dem Plattenelement 1 gemäß Fig. 3 in zwei unterschiedlichen Stellungen. In einer ersten Seite (entsprechend Breite 10) sind in vorzugsweise gleichen Abständen 22 bzgl. der Längsachse 5 die schwalbenschwanzförmigen Ausnehmungen 11 in dem Brett 2 ausgeformt, sodass eine regelmäßige Abfolge von Ausnehmungen 11 und Vorsprüngen 12 vorhanden ist.

Die Vorsprünge 12 und die Ausnehmungen 11 sind bevorzugt symmetrisch bezüglich der Mittelebene 17 mit dem halben Keilwinkel 15 ausgebildet. Dabei sind die Abmessungen der Ausnehmung 11 so bemessen, dass eine lichte Weite 23 am Rand 13 des Bretts 2 gleich groß ist wie eine Breite 24 des Vorsprungs 12 im Bereich der Mittelebene 17. Es ergeben sich somit ein Bereich 25 des Vorsprungs 12 und ein Bereich 26 der Ausnehmung 11, wie sie in der Fig. 4 durch eingezeichnete Schraffuren angedeutet sind. Der Bereich 25 des Vorsprungs 12 umfasst ein durch die Mittenebene 17 begrenztes Teilvolumen dessen äußere Gestalt im Wesentlichen einem symmetrischen Trapez entspricht. Dieses Teilvolumen des Bereichs 25 bildet gleichzeitig eine Hälfte des Vorsprungs 12. Der Bereich 26 der Ausnehmung 11 umfasst andererseits ein durch die Mittenebene 17 begrenzte Hälfte der Ausnehmung 11. Der Bereich 26 der Ausnehmung 11 gleicht dem Bereich 25 des Vorsprungs 12 insofern, als die beiden Bereiche 25, 26 die gleiche äußere Gestalt aufweisen. Demzufolge kann ein Bereich 25 eines Vorsprungs 12 eines weiteren Brettes 2 in dem Bereich 26 der Ausnehmung 11 des ersten Brettes 2 exakt, das heißt im Wesentlichen raumfüllend, eingesetzt werden. Wegen des schwalbenschwanzförmigen Querschnitts der Vorsprünge 12 bzw. der Ausnehmungen 11 ergibt sich damit die vorstehend anhand der Fig. 3 beschriebene, formschlüssige Verbindung zwischen den Brettern 2 des Plattenelementes 1.

Die Ausbildung der Nuten 20 und 21 an den schmalen Seiten der Bretter 2 ist derart gestaltet, dass zwischen den Nuten 20 liegende Vorsprünge als Spunde in die Nuten 21 eines weiteren Brettes 2 eingefügt werden können (Fig. 3). Die beschriebene Ausgestaltung der Bretter 2 mit den Ausnehmungen 11 und den Vorsprüngen 12 einerseits und den Nuten 20 und 21 in den zu den Vorsprüngen 12 angrenzenden Seiten des Brettes 2 andererseits ermöglicht in vorteilhafter Weise einen modularen Aufbau von Plattenelementen 1. Bretter 2 mit einer Grundform im Wesentlichen gleicher Gestalt können wie in einem Baukastenprinzip zu nahezu beliebig großen Plattenelementen 1 zusammengesetzt werden. Für den Aufbau des Plattenelements 1, wie in Fig. 3 dargestellt, sind somit lediglich zwei Grundformen bzw. Typen von Brettern 2 erforderlich. Für die Bretter 2 der ersten Schicht 3 stehen Bretter 2, wie in Fig. 4 dargestellt, zur Verfügung. Soll wie im Fall der zweiten Schicht 4 eine weitere Schicht, das heißt gemäß Fig. 3, die Schicht 18 angefügt werden, so ist für die Bretter 2 der zweiten Schicht 4 eine weitere Grundform der Bretter 2 erforderlich, die sowohl an der einen Seite Vorsprünge 12 und Ausnehmungen 11 als auch an der der ersten Seite gegenüberliegenden breiten Seite eine in gleicher Weise abwechselnde Folge von Vorsprüngen 12 und Ausnehmungen 11 aufweist. Im Falle des Plattenelementes 1 gemäß Fig. 3 könnte durch eine weitere, das heißt eine vierte Schicht (nicht dargestellt) von Brettern 2 gemäß Fig. 4, ein insgesamt vierschichtiges Plattenelement 1 hergestellt werden. Das heißt ein so zusammengesetztes Plattenelement 1 ist an allen außen liegenden Seiten im Wesentlichen ebenflächig begrenzt.

Die erfindungsgemäßen Bretter 2 können ausgehend von gewöhnlichen Brettern mit einer quaderförmigen, äußeren Begrenzung hergestellt werden. Dazu werden in einem solchen zunächst unbearbeiteten Brett mit der Breite 10 und einer Dicke 27 mit entsprechenden Werkzeugen die Ausnehmungen 11 und die Nuten 20, 21 ausgeformt. Dies kann beispielsweise mit entsprechenden Säg- bzw. Fräswerkzeugen durchgeführt werden. Dabei werden die Ausnehmungen 11 außerdem so bemessen, dass ein Wert einer Tiefe 28 in einem Bereich von 10 % bis 30 % der Dicke 27 der Bretter 2 liegt.

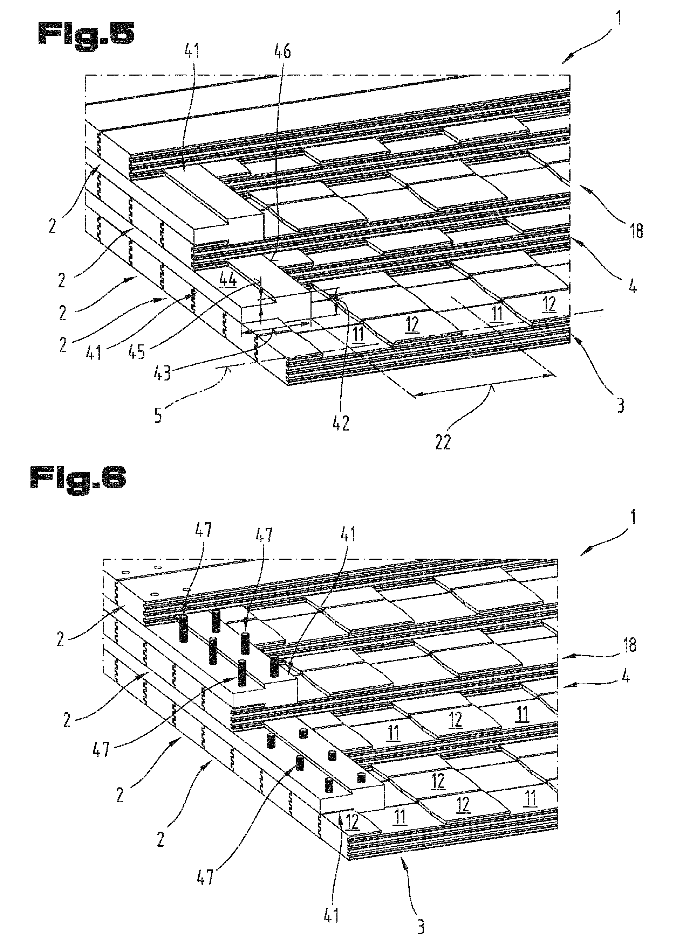

Die Fig. 5 zeigt ein weiteres Ausführungsbeispiel des Plattenelementes 1 mit insgesamt fünf Schichten 3, 4, 18 von Brettern 2. Dieses Plattenelement 1 umfasst zumindest in einem ersten Endbereich bezüglich der Längserstreckung bzw. Längsachse 5 der Bretter 2 einen Balken 41. Zu beachten ist dabei, dass in der Darstellung gemäß Fig. 5 (wie auch in den Fig. 1 bis 3) die einzelnen Schichten 3, 4, 18 zur besseren Verdeutlichung des Innenaufbaus des Plattenelements 1 teilweise unvollständig gezeigt bzw. die Balken 41 teilweise verkürzt dargestellt sind. Dieser Balken 41 ist senkrecht bezüglich der Längsachse 5 der Bretter 2 ausgerichtet und zwischen der ersten Schicht 3 und der dritten Schicht 18 liegend angeordnet. Der Balken 41 weist eine Dicke 42 auf, deren Wert gleich ist der Dicke 27 eines Brettes 2. Der Wert einer Breite 43 des Balken 21 ist gleich einer Hälfe des Abstands 22 von in den Brettern 2 aufeinanderfolgend angeordneten und ausgeformten Ausnehmungen 11. Schließlich umfasst der Balken 41 an seinen der Breite 43 entsprechenden Seiten Ausnehmungen 44 mit einer Tiefe 45 deren Wert gleich ist der Tiefe 28 der Ausnehmungen 11 in den Brettern 2. Die Ausnehmungen 44 des Balkens 41 erstrecken sich profilartig über die gesamte Längserstreckung des Balkens 41. Sie sind so bemessen, dass die Seiten des Balkens 41 entsprechend der Breite 43 als auch eine schmale Seite 46 des Balkens 41 mit benachbarten Brettern 2 der ersten Schicht 3 und der dritten Schicht 18 bzw. mit Stirnseiten der Bretter 2 der zweiten Schicht 4 in direktem Kontakt stehend anliegen. Auf diese Weise ist auch zwischen dem Balken 41 und den Brettern 2 des Plattenelementes 1, so wie zwischen den Brettern 2 untereinander, eine formschlüssige Verbindung ausgebildet.

Durch das zusätzliche Vorsehen des Balkens 41 bei dem Plattenelement 1 wird eine noch höhere Formstabilität des Plattenelementes 1 erreicht. Verformungen wie sie bekanntlich bei Brettern aus Schnittholz in Folge eines wechselnden Feuchtegehaltes durch Austrocknung oder Aufnahme von Feuchtigkeit in Umgebungen mit hoher Luftfeuchtigkeit auftreten können, können durch den mechanischen Wiederstand des Balkens 41 zumindest teilweise aufgefangen und somit verhindert werden.

Die Fig. 6 zeigt eine Ausführungsvariante des Plattenelementes 1 gemäß Fig. 5. Das Plattenelement 1 weist neben zwei Balken 41 auch durch die Bretter 2 und die Balken 41 hindurchreichende Zapfen bzw. Bolzen 47 auf, die in entsprechenden, quer zu dem Plattenelement 1 gerichteten Löchern eingesetzt sind. Die Zapfen bzw. Bolzen 47 können als Holzdübel oder Holzschrauben ausgebildet sein, sie können aber auch aus einem anderen Material, wie z.B. Metall oder Kunststoff, bestehen. Neben einer Erhöhung der Steifigkeit des Plattenelementes 1 wird durch die Bolzen 47 eine zusätzliche Formstabilisierung hinsichtlich einer möglicherweise auftretenden Formveränderung in Richtung der Breite 10 des Plattenelementes 1 erreicht. Für die Bolzen 47 wird bevorzugt Holz als Werkstoff verwendet.

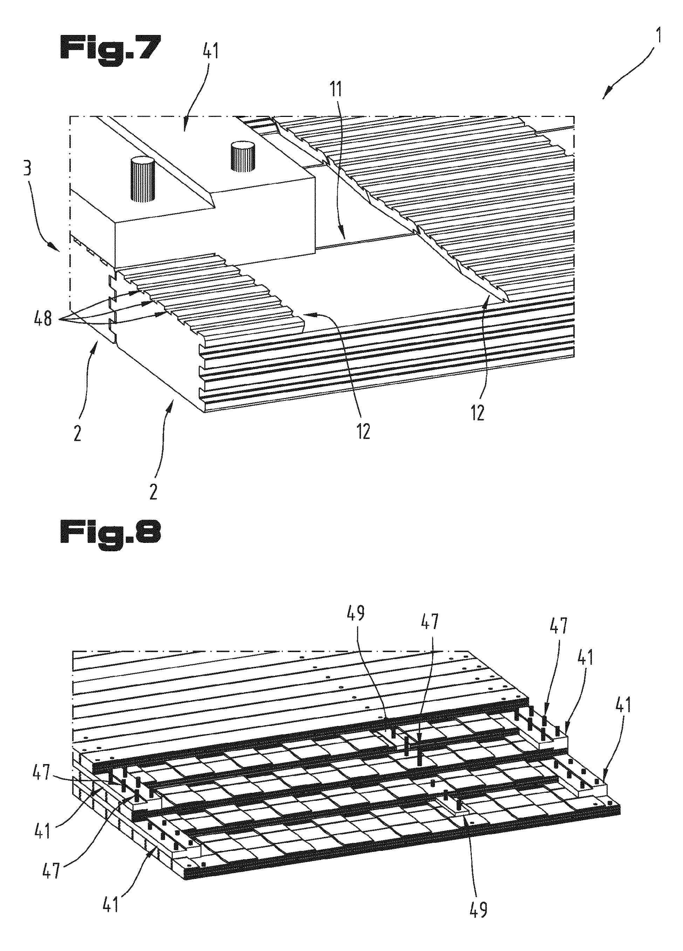

Die Fig. 7 zeigt eine Ausführungsvariante des Plattenelementes 1 gemäß Fig. 6. Bei den Brettern 2 gemäß dieses Ausführungsbeispiels sind in den Vorsprüngen 12 Nuten 48 eingeformt. Diese Nuten 48 sind parallel nebeneinander angeordnet und verlaufen parallel zu der Längsachse 5 der Bretter 2. Die Nuten 48 bewirken die Ausbildung von zwischen den Brettern 2 der verschiedenen Schichten 3, 4, 18 eingeschlossenen Hohlräumen. Dadurch in den Hohlräumen der Nuten 48 eingeschlossene Luft bewirkt wiederum eine Erhöhung der wärmeisolierenden Wirkung des Plattenelementes 1.

Alternativ zu den parallel zur Längsachse 5 der Bretter 2 ausgerichteten Nuten 48 in den Vorsprüngen 12 können aber auch anders ausgerichtete Nuten oder überhaupt anders geformte Vertiefungen zur Bildung von geschlossenen Hohlräumen in dem Plattenelement 1 vorgesehen sein. Andererseits ist aber auch möglich, dass im Bereich der Ausnehmungen 11 weitere Vertiefungen in dem Material des Bretts 2 zur Ausbildung von zwischenliegenden Hohlräumen vorgesehen sind.

Die Fig. 8 zeigt ein Plattenelement 1 gemäß Fig. 6 mit quer liegenden Balken 41. Dazu sind in den beiden Endbereichen der Bretter 2 Balken 41, wie im Zusammenhang mit Fig. 6 beschrieben, angeordnet. Diese sind mit dem Plattenelement 1 - neben der formschlüssig bestehenden Verbindung - auch noch zusätzlich durch die Bolzen 47 in ihrer relativen Lage fixiert. Gemäß diesem Ausführungsbeispiel umfasst das Plattenelement 1 neben den Balken 41 in den beiden Endbereichen der Bretter 2 auch noch in einem von den beiden Endbereichen distanzierten, zwischenliegenden Bereich Balken 49, die zwischen den Schichten 3, 4, 18 des Plattenelements 1 eingelagert sind. Diese Balken 49 sind ebenso wie die Balken 41 der Endbereiche der Bretter 2 quer zu den Längsachsen 5 der Bretter 2 in dem Plattenelementen 1 eingebunden. Die Balken 49 haben im Wesentlichen einen rechteckigen Querschnitt und sind zu deren Einlagerungen zwischen den Schichten 3, 4, 18 der Bretter 2 in den angrenzenden Oberflächen der Bretter 2, und zwar gemäß Ausführungsbeispiel im Bereich der Ausnehmungen 11 zusätzliche zu der äußeren Form der Balken 49 komplementäre Ausnehmungen vorgesehen. Ebenso wie die Balken 49 in den Endbereichen der Bretter 2 sind auch die Balken 49 zusätzlich mit Bolzen 47 fixiert.

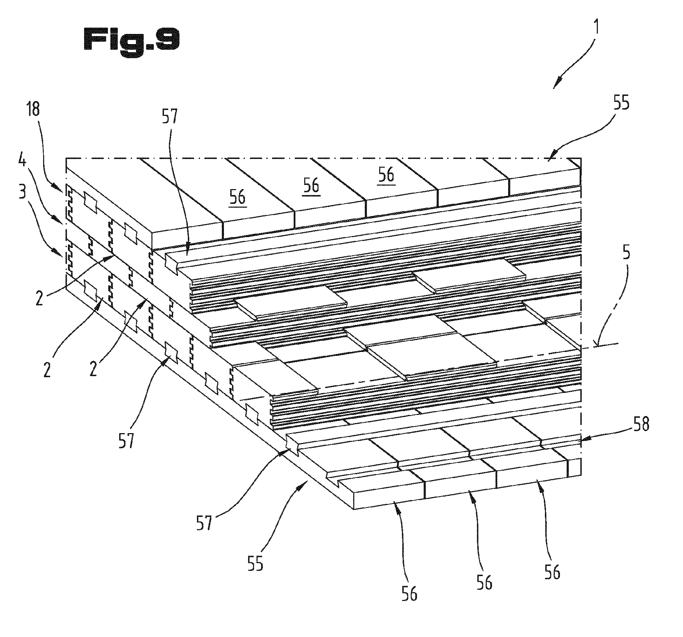

Die Fig. 9 zeigt ein weiteres Ausführungsbeispiel des Plattenelements 1 mit einer zusätzlichen Holzverkleidung 55. Dieses Plattenelement 1 wird in seinem Inneren durch drei Schichten 3, 4, 18 von Brettern 2, in der Weise wie in Fig. 3 beschrieben, gebildet, wobei die Bretter 2 formschlüssig miteinander verbunden sind. An den beiden Außenseiten sind jeweils die Holzverkleidungen 55 als eine weitere Schicht von Brettern 56 angeordnet und ebenfalls in formschlüssiger Weise mit der ersten Schichten 3 und der dritten Schicht 18 verbunden. Dazu sind die Bretter 56 der Holzverkleidung 55 quer, das heißt senkrecht zu der Längserstreckung bzw. der Längsachse 5 der Bretter 2, ausgerichtet und parallel nebeneinander liegend angeordnet. Die Verbindung der Bretter 56 der Holzverkleidung 55 mit den Brettern 2 der ersten Schicht 3 bzw. der dritten Schicht 18 erfolgt durch die Zwischenschaltung von mehreren Verbindungselementen 57. Gemäß diesem Ausführungsbeispiel sind die Verbindungselemente 57 durch Gratleisten gebildet. Diese Gratleisten 57 sind parallel zur Längserstreckung bzw. Längsachse 5 der Bretter 2 in entsprechende Ausnehmungen in den Brettern 2 eingesetzt. Die Bretter 56 der Holzverkleidung 55 weisen ihrerseits ebenfalls entsprechende Ausnehmungen bzw. Nuten 58 auf, durch die sie wiederum mit dem Verbindungselement 57 verbunden werden können. Wie schon beschrieben, sind die Verbindungselemente 57 durch Gratleisten gebildet. Das heißt, zwischen den Brettern 56 und dem Verbindungselement 57 einerseits und den Verbindungselementen 57 und den Brettern 2 andererseits, ist jeweils eine formschlüssige Verbindung in der Art einer Schwalbenschwanzverbindung ausgebildet.

In einer alternativen Ausführungsvariante könnte das Verbindungselement 57 aber auch nach der Art einer Nut-Feder-Verbindung mit den Brettern 2 einerseits und den Brettern 56 der Holzverkleidung 55 andererseits verbunden sein. Das heißt, das Verbindungselement 57 wird durch eine sogenannte Feder gebildet und die Holzverkleidung 55 ist dann durch eine kraftschlüssige Verbindung an den Brettern 2 befestigt.

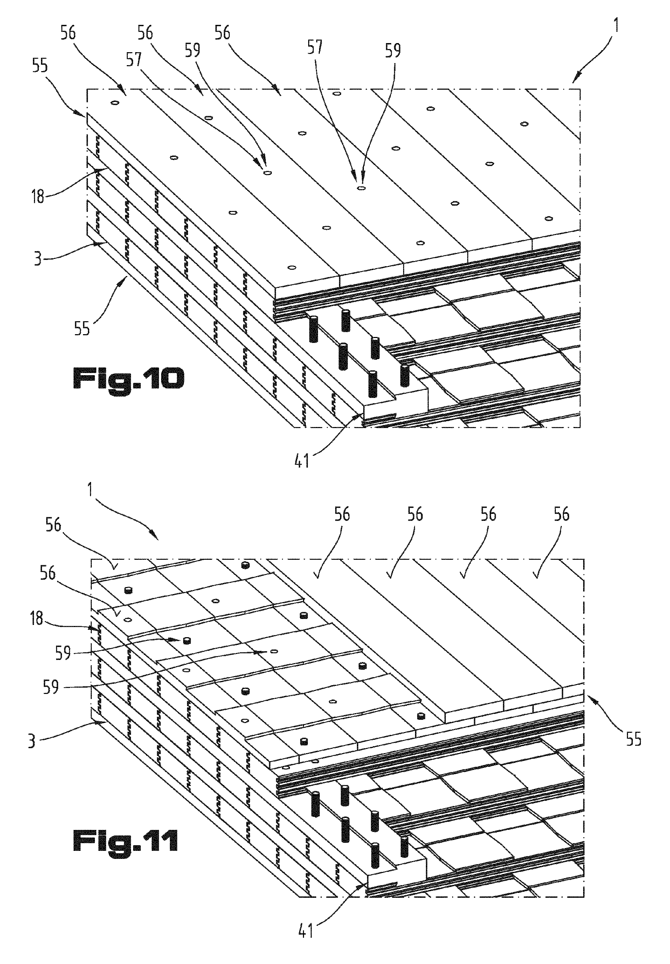

Die Fig. 10 zeigt ein Ausführungsbeispiel des Plattenelementes 1 gemäß Fig. 8 mit der Holzverkleidung 55 in einer alternativen Ausführungsvariante. Dabei sind die Bretter 56 der Holzverkleidung 55 parallel nebeneinander liegend durch Verbindungselemente 57 in der Form von Holzdübeln 59 oder Holzschrauben mit den jeweils äußeren Schichten 3, 18 des Plattenelementes 1 verbunden. Durch die Verwendung der Holzdübel 59 bzw. Holznägel wird eine kraftschlüssige Verbindung erreicht.

Die Fig. 11 zeigt ein Plattenelement 1 mit einer zweilagigen Holzverkleidung 55. Eine erste Lage 60 von Brettern 56 ist dabei mittels Holzdübeln 59 an den jeweils äußeren Schichten 3, 18 des Plattenelementes 1 befestigt. Andererseits weisen die Bretter 56 der ersten Lage 60 schwalbenschwanzförmige Ausnehmungen und Vorsprünge auf, die ihrerseits eine entsprechende, formschlüssige Verbindung von Brettern 56 einer zweiten Lage 61 der Holzverkleidung 55 ermöglichen. Die Schwalbenschwanzverbindungen zwischen den Brettern 56 der ersten Lage 61 und den Brettern 56 der zweiten Lage 61 sind in analoger Weise wie die Schwalbenschwanzverbindungen zwischen den Brettern 2 der Schichten 3, 4, 18, wie vorstehend anhand der Fig. 1 bis 4 beschrieben, ausgebildet.

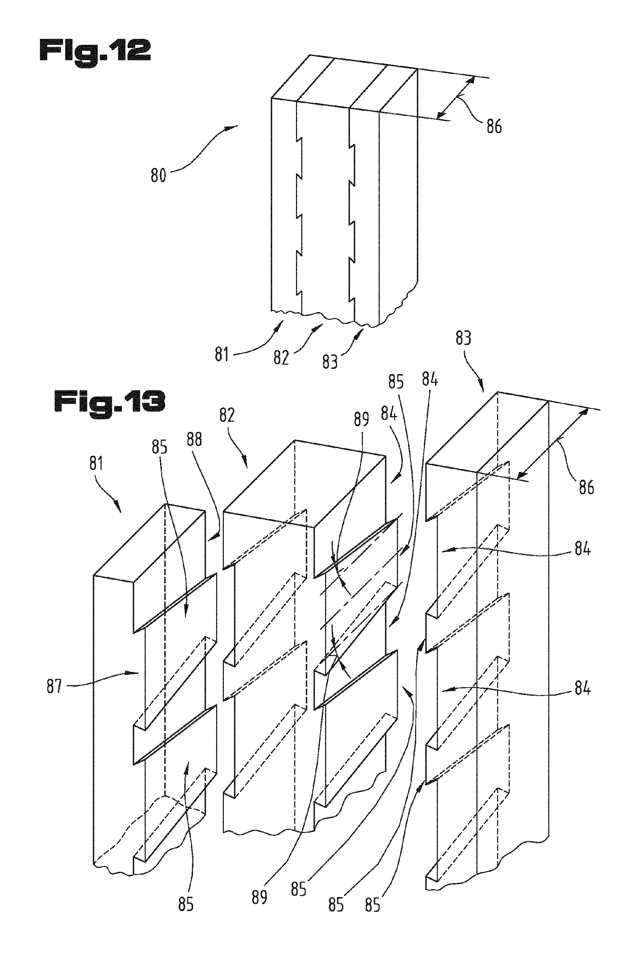

Anhand der Fig. 12 und 13 wird ein aus mehreren Schichten zusammengesetzter Balken 80 beschrieben. Der Balken 80 wird gemäß diesem Ausführungsbeispiel durch drei Bretter gebildet, die mit ihrer Längsrichtung parallel ausgerichtet aneinander liegen und formschlüssig miteinander verbunden sind. Dazu sind zwischen einem ersten Brett 81 und einem zweiten Brett 82 einerseits und zwischen dem zweiten Brett 82 und einem dritten Brett 83 andererseits Verbindungen in der Art von Schwalbenschwanzverbindungen ausgebildet. Die Bretter 81, 82, 83 weisen jeweils in Richtung ihrer Längserstreckung aufeinander folgend eine Abfolge von schwalbenschwanzförmigen Ausnehmungen 84 und Vorsprüngen 85 auf. Die Ausnehmungen 84 und Vorsprünge 85 erstrecken sich ihrerseits in Richtung einer Breite 86 der Bretter 81, 82, 83.

Die Fig. 13 zeigt die Bretter 81, 82, 83 des Balkens 80 in ihrem nicht zusammengefügten Zustand. Wie man anhand der Darstellung erkennen kann, ist der Querschnitt der Ausnehmungen 84 bzw. Vorsprünge 85 bezüglich der Richtung der Breite 86 über die Breite 86 hinweg veränderlich. Und zwar ist der Querschnitt der Vorsprünge 85 von einem ersten Rand 87 zu einem gegenüberliegenden, zweiten Rand 88 hin keilförmig veränderlich ausgebildet. Die Vorsprünge 85 der Schwalbenschwanzverbindungen weisen günstigerweise beidseitig eine Schrägstellung um einen halben Keilwinkel mit einem Wert zwischen 0,5° und 10°, vorzugsweise zwischen 3° und 10° auf. Vorsprünge 85 des ersten Bretts 81 einerseits und Ausnehmungen 84 des zweiten Bretts 82 andererseits sind somit komplementär zueinander geformt und können raumfüllend ineinander gefügt werden. Das Verbinden der Bretter 81, 82, 83 zu dem Balken 80 wird durch die beschriebene Schrägstellung der Seiten der Vorsprünge 85 bzw. der Seiten der Ausnehmungen 84 wesentlich erleichtert. Die aufgrund der Schrägstellung der Seiten erreichte, keilförmige Gestalt der Ausnehmungen 84 und Vorsprünge 85 hat darüber hinaus auch noch den Vorteil, dass diese beim Zusammenfügen bis zu einem gewissen Grad durch entsprechenden Kraftaufwand ineinander gepresst werden können und so zusätzlich auch ein kraftschlüssiger Effekt bei der Herstellung der Verbindung der Bretter 81, 82, 83 erreicht wird.

In einer alternativen Ausführungsform wäre es aber auch möglich, nur an einer Seite der Vorsprünge 85 bzw. Ausnehmungen 84 einer Schrägstellung ihrer Seiten vorzusehen. Gemäß weiteren Ausführungsvarianten kann ein aus Schichten zusammengesetzter Balken 80 auch aus nur zwei Brettern 81, 82 zusammengesetzt sein oder aber auch durch mehr als drei Bretter 81, 82, 83 gebildet sein.

Die Ausführungsbeispiele zeigen mögliche Ausführungsvarianten des Plattenelements 1, wobei auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus des Plattenelements 1 dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

| | | | |
|---|---|---|---|
| 1 | Plattenelement | 56 | Brett |
| 2 | Brett | 57 | Verbindungselement |
| 3 | Schicht | 58 | Nut |
| 4 | Schicht | 59 | Holzdübel |
| 5 | Längsachse | 60 | Lage |
| 6 | Brett | 61 | Lage |
| 7 | Längsachse | | |
| 8 | Brett | 80 | Balken |
| 9 | Überlappungsbreite | | |
| 10 | Breite | 81 | Brett |
| | | 82 | Brett |
| 11 | Ausnehmung | 83 | Brett |
| 12 | Vorsprung | 84 | Ausnehmung |
| 13 | Rand | 85 | Vorsprung |
| 14 | Brettmitte | | |
| 15 | halber Keilwinkel | 86 | Breite |
| | | 87 | Brettrand |
| 16 | Spalt | 88 | Brettrand |
| 17 | Mittenebene | 89 | Keilwinkel |
| 18 | Schicht | | |
| 19 | Dicke | | |
| 20 | Nut | | |
| 21 | Nut | | |
| 22 | Abstand | | |
| 23 | Lichte Weite | | |
| 24 | Breite | | |
| 25 | Bereich | | |
| 26 | Bereich | | |
| 27 | Dicke | | |
| 28 | Tiefe | | |
| 41 | Balken | | |
| 42 | Dicke | | |
| 43 | Breite | | |
| 44 | Ausnehmung | | |
| 45 | Tiefe | | |
| 46 | Seite | | |
| 47 | Bolzen | | |
| 48 | Nut | | |
| 49 | Balken | | |
| 55 | Holzverkleidung | | |

## Patentansprüche

1. Plattenelement (1) aus Holz bestehend aus zumindest zwei Schichten (3, 4) aus jeweils parallel nebeneinanderliegend angeordneten Brettern (2), wobei Bretter (2) einer ersten Schicht (3) parallel zu Brettern (2) einer zweiten Schicht (4) ausgerichtet sind, und wobei ein Brett (2) der ersten Schicht (3) und ein Brett (2) der zweiten Schicht (4) durch Schwalbenschwanzverbindungen miteinander verbunden sind und die Schwalbenschwanzverbindungen durch eine in Richtung einer Längserstreckung der Bretter (2) aufeinanderfolgende und in den Brettern (2) ausgeformte Abfolge von schwalbenschwanzförmigen Ausnehmungen (11) und Vorsprüngen (12) gebildet sind, wobei sich die Ausnehmungen (11) und die Vorsprünge (12) in Richtung einer Breite (10) der Bretter (2) erstrecken, wobei ein Brett (2) der ersten Schicht (3) und ein Brett (2) der zweiten Schicht (4) in Richtung der Breite (10) gegeneinander versetzt und einander überlappend angeordnet sind, **dadurch gekennzeichnet, dass** die Ausnehmungen (11) der Schwalbenschwanzverbindungen von einem Brettrand (13) zu einer Brettmitte (14) hin sich keilförmig verjüngend geformt sind.

2. Plattenelement (1) nach Anspruch 1, **dadurch gekennzeichnet, dass** die Ausnehmungen (11) der Schwalbenschwanzverbindungen beidseitig eine Schrägstellung mit einem halben Keilwinkel (15) mit einem Wert zwischen 0,5° und 10° aufweisen.

3. Plattenelement (1) nach Anspruch 1 oder 2, **dadurch gekennzeichnet, dass** sich ein Brett (2) der ersten Schicht (3) und ein Brett (2) der zweiten Schicht (4) über eine Überlappungsbreite (9) mit einem Wert von gleich oder größer als 10 % der Brettbreite (10) überlappen.

4. Plattenelement (1) nach einem der vorhergehenden Ansprüche, **dadurch gekennzeichnet, dass** die Abmessungen der Vorsprünge (12) im Verhältnis zu den Abmessungen der Ausnehmungen (11) so gewählt sind, dass Bretter (2) jeweils einer Schicht (3, 4, 18) spaltfrei aneinander liegen.

5. Plattenelement (1) nach einem der vorhergehenden Ansprüche, **dadurch gekennzeichnet, dass** der Wert der Überlappungsbreite (9) circa einer Hälfte der Breite (10) der Bretter (2) entspricht und zwischen einander benachbarten und innerhalb einer Schicht (3, 4, 18) liegenden Brettern (2) eine Nut-Spund-Verbindung ausgebildet ist.

6. Plattenelement (1) nach einem der vorhergehenden Ansprüche, **dadurch gekennzeichnet, dass** die Vorsprunge (12) und die Ausnehmungen (11) der Bretter (2) symmetrisch bezüglich einer zu der Breite (10) der Bretter (2) senkrechten Mittenebene (17) sind.

7. Plattenelement (1) nach einem der vorhergehenden Ansprüche, **dadurch gekennzeichnet, dass** die Abmessungen der Ausnehmung (11) so bemessen sind, dass eine lichte Weite (23) am Rand (13) des Bretts (2) gleich groß ist wie eine Breite (24) des Vorsprungs (12) im Bereich der Mittelebene (17).

8. Plattenelement (1) nach einem der vorhergehenden Ansprüche, **dadurch gekennzeichnet, dass** in einem ersten Endbereich bezüglich einer Längsachse (5) der Bretter (2) ein Balken (41) angeordnet ist und dieser senkrecht bezüglich der Längsachse (5) der Bretter (2) ausgerichtet ist.

9. Plattenelement (1) nach einem der vorhergehenden Ansprüche, **dadurch gekennzeichnet, dass** der Balken (41) zwischen der ersten Schicht (3) aus Brettern (2) und einer dritten Schicht (18) aus Brettern (2) liegend angeordnet ist.

10. Plattenelement (1) nach einem der vorhergehenden Ansprüche, **dadurch gekennzeichnet, dass** der Balken (41) eine Dicke (42) aufweist, deren Wert gleich ist einem Wert einer Dicke (27) des Brettes (2).

11. Plattenelement (1) nach einem der vorhergehenden Ansprüche, **dadurch gekennzeichnet, dass** in einem von den beiden Endbereichen distanziert liegenden Bereich ein Balken (49), der parallel zu dem in dem ersten Endbereich angeordneten Balken (41) ausgerichtet ist, zwischen den Schichten (3, 4, 18) eingelagert ist.

12. Plattenelement (1) nach einem der vorhergehenden Ansprüche, **dadurch gekennzeichnet, dass** die Bretter (2) und der Balken (41) durch Bolzen (47), die durch die Bretter (2) und den Balken (41) hindurchreichen, aneinander fixiert sind.

13. Plattenelement (1) nach einem der vorhergehenden Ansprüche **dadurch gekennzeichnet, dass** in den Vorsprüngen (12) der Bretter (2) Vertiefungen zur Bildung von Hohlräumen in dem Plattenelement 1 ausgeformt sind.

14. Plattenelement (1) nach einem der vorhergehenden Ansprüche, **dadurch gekennzeichnet, dass** in den Vorsprüngen (12) der Bretter (2) Nuten (48) ausgeformt sind.

## Claims

1. Panel element (1) made of wood consisting of at least two layers (3, 4) each of which is made of boards (2) lying adjacently to one another in a parallel manner, the boards (2) of a first layer (3) being aligned parallel with boards (2) of a second layer (4), and a board (2) of the first layer (3) and a board (2) of the second layer (4) being connected to each other by dovetail joints and the dovetail joints are produced by a sequence of dovetail-shaped recesses (11) and projections (12), said recesses (11) and projections (12) following one another in a direction of a longitudinal extension of the boards (2) and being shaped into the boards (2), the recesses (11) and the projections (12) extending in the direction of a width (10) of the boards (2), a board (2) of the first layer (3) and a board (2) of the second layer (4) being arranged to be offset to each other in the direction of the width (10) and to overlap each other, **characterized in that** the recesses (11) of the dovetail joints have a wedge shape so as to taper from a board edge (13) to a board center (14).

2. Panel element (1) according to claim 1, **characterized in that** the recesses (11) of the dovetail joints have an inclined position on both sides, the half wedge angle (15) of said inclined position has a value of between 0.5° and 10°.

3. Panel element (1) according to claim 1 or 2, **characterized in that** a board (2) of the first layer (3) and a board (2) of the second layer (4) overlap each other over an overlapping width (9) having a value that is equal to or greater than 10% of the board width (10).

4. Panel element (1) according to one of the preceding claims, **characterized in that** the dimensions of the projections (12) in proportion to the dimensions of the recesses (11) are such selected that boards (2) of one respective layer (3, 4, 18) lie against one another so as to be gap-free.

5. Panel element (1) according to one of the preceding claims, **characterized in that** the value of the overlapping width (9) corresponds to approximately one half of the width of the boards (2) and a tongue-and-groove-joint is designed between boards (2) lying adjacently to one another and within one layer (3, 4, 18).

6. Panel element (1) according to one of the preceding claims, **characterized in that** the projections (12) and the recesses (11) of the boards (2) are symmetric by reference to a center plane (17) vertical to the width (10) of the boards (2).

7. Panel element (1) according to one of the preceding claims, **characterized in that** the dimensions of the recess (11) is such calculated that a clear width (23) at the edge (13) of the board (2) equals a width (24) of the projection (12) in the region of the center plane (17).

8. Panel element (1) according to one of the preceding claims, **characterized in that** a beam (41) is arranged in a first end region with respect to a longitudinal axis (5) of the boards (2) and said beam (41) is aligned to be vertical with respect to the longitudinal axis (5) of the boards (2).

9. Panel element (1) according to one of the preceding claims, **characterized in that** the beam (41) is arranged so as to lie between the first layer (3) of boards (2) and a third layer (18) of boards (2).

10. Panel element (1) according to one of the preceding claims, **characterized in that** the beam (41) has a thickness (42) the value of which equals a value of a thickness (27) of the board (2).

11. Panel element (1) according to one of the preceding claims, **characterized in that** in a region distant from the two end regions a beam (49) is accommodated which is oriented to be parallel with the beam (41) disposed in the first end region and between the layers (3, 4, 18).

12. Panel element (1) according to one of the preceding claims, **characterized in that** the boards (2) and the beam (41) are fixed to one another by bolts (47) reaching through the boards (2) and the beam (41).

13. Panel element (1) according to one of the preceding claims, **characterized in that** depressions for the formation of cavities in the panel element (1) are formed into the projections (12) of the boards (2).

14. Panel element (1) according to one of the preceding claims, **characterized in that** grooves (48) are formed into the projections (12) of the boards (2).

## Revendications

1. Elément de plaque (1) en bois consistant en au moins deux couches (3, 4) de planches (2) disposées parallèlement les unes à côté des autres, des planches (2) d'une première couche (3) étant orientées parallèlement à des planches (2) d'une deuxième couche (4), et une planche (2) de la première couche (3) et une planche (2) de la deuxième couche (4) étant attachées l'une à l'autre par des liaisons en queue d'aronde et les liaisons en queue d'aronde étant formées par une suite de mortaises (11) et tenons (12) en forme de queue d'aronde se suivant dans la direction d'une étendue longitudinale des planches (2) et étant formés dans les planches (2), les mortaises (11) et les tenons (12) s'étendant dans la direction d'une largeur (10) des planches (2), une planche (2) de la première couche (3) et une planche (2) de la deuxième couche (4) étant décalées l'une par rapport à l'autre et se chevauchant dans la direction de la largeur (10), **caractérisé en ce que** les mortaises (11) des liaisons en queue d'aronde sont formées avec un rétrécissement en forme de coin allant d'un bord de planche (13) à un milieu (14) de la planche.

2. Elément de plaque (1) selon la revendication 1, **caractérisé en ce que** les mortaises (11) des liaisons en queue d'aronde présentent des deux côtés une position oblique avec un demi-angle d'obliquité (15) ayant une valeur entre 0,5° et 10°.

3. Elément de plaque (1) selon la revendication 1 ou 2, **caractérisé en ce qu'**une planche (2) de la première couche (3) et une planche (2) de la deuxième couche (4) se chevauchent avec une largeur de chevauchement (9) ayant une valeur égale ou supérieure à 10% de la largeur de planche (10).

4. Elément de plaque (1) selon l'une des revendications précédentes, **caractérisé en ce que** les dimensions des tenons (12) sont choisies par rapport aux dimensions des mortaises (11) de façon que des planches (2) correspondantes de chacune des couches (3, 4, 18) soient adjacentes les unes aux autres sans jeu.

5. Elément de plaque (1) selon l'une des revendications précédentes, **caractérisé en ce que** la valeur de chevauchement (9) correspond approximativement à une moitié de la largeur (10) des planches (2) et **en ce qu'**une liaison tenon-mortaise est formée entre des planches (2) adjacentes d'une même couche (3, 4, 18).

6. Elément de plaque (1) selon l'une des revendications précédentes, **caractérisé en ce que** les tenons (12) et les mortaises (11) des planches (2) sont symétriques par rapport à un plan médian (17) perpendiculaire à la largeur (10) des planches (2).

7. Elément de plaque (1) selon l'une des revendications précédentes, **caractérisé en ce que** les dimensions de la mortaise (11) sont choisies de façon qu'une largeur intérieure (23) au bord (13) de la planche (2) soit égale à une largeur (24) du tenon (12) dans la zone du plan médian (17).

8. Elément de plaque (1) selon l'une des revendications précédentes, **caractérisé en ce que** dans une zone d'extrémité par rapport à un axe longitudinal (5) des planches (2) soit disposée une poutre (41) et que celle-ci soit orientée perpendiculairement par rapport à l'axe longitudinal (5) des planches (2).

9. Elément de plaque (1) selon l'une des revendications précédentes, **caractérisé en ce que** la poutre (41) est disposée entre la première couche (3) de planches (2) et une troisième couche (18) de planches (2).

10. Elément de plaque (1) selon l'une des revendications précédentes, **caractérisé en ce que** la poutre (41) présente une épaisseur (42) dont la valeur est égale à une valeur d'une épaisseur (27) de la planche (2).

11. Elément de plaque (1) selon l'une des revendications précédentes, **caractérisé en ce que** dans une zone espacée des deux zones d'extrémité, une poutre (49) est insérée entre les couches (3, 4, 18), qui est orientée parallèlement à la poutre (41) disposée dans la première zone d'extrémité.

12. Elément de plaque (1) selon l'une des revendications précédentes, **caractérisé en ce que** les planches (2) et la poutre (41) sont fixées les unes aux autres par des boulons (47) qui traversent les planches (2) et la poutre (41).

13. Elément de plaque (1) selon l'une des revendications précédentes, **caractérisé en ce que** dans les tenons (12) des planches (2) sont formés des évidements pour former des espaces creux dans l'élément de plaque (1).

14. Elément de plaque (1) selon l'une des revendications précédentes, **caractérisé en ce que** des rainures (48) sont formées dans les tenons (12) des planches (2).
